# EUROPEAN PATENT APPLICATION

(11) **EP 2 952 454 A1**
(43) Date of publication of application: **09.12.2015**
(21) Application number: 14170771.1
(22) Date of filing: 02.06.2014
(51) Int. Cl.: B65G 1/04

(54) **Method of extending the load handling range of an automated storage/retrieval system**

(71) Applicant: Dematic Systems GmbH, 63150 Heusenstamm (DE)
(72) Inventor: Rehm, Pascal, 33617 Bielefeld (DE)
(74) Representative: Moser Götze & Partner Patentanwälte mbB

(57) **Abstract**

Method of extending the load handling range of a load handling means (5) used in an automated storage/retrieval system, which includes a pair of multi-level racks (R1, R2, R3) arranged parallel to each other, wherein the load handling means (5) is for storing unit loads (A) and retrieving a unit load (A) from the multi-level racks (R1, R2, R3), the load handling means, preferably transferring shuttle, comprising:
a travelling platform;
respective telescopic mechanisms (6) provided in front and rear parts of the travelling platform, the platform being between the telescopic mechanisms (6); and
respective outer fingers (7) provided at both ends of the telescopic mechanisms (6), each finger (7) being operable between a projected position (7A) and a retracted position (7B), wherein the load handling means (5) uses a dummy unit (D) to push the unit-load (A) deeper into the rack (R1, R2, R3).

## Description

The invention relates to a method of order fulfilling in accordance with the preamble of claim 1.

When picking or compiling orders from transporting units, such as e.g. articles or containers, it is necessary to provide the transporting or storage units, which are associated with a common order, in a directed or sorted fashion. In addition, it is conventional to intermediately store (buffer) the transporting units of an order, until all of the transporting units required for the order are present. They are then passed together onto a collecting line which leads them e.g. to the palletization area, picking station, goods issue, shipment etc.

In the picking station the goods for fulfilling an order are taken from the transporting or storage units and placed according to the order into an order container etc. The storage container (often called donor) is then routed back into the racking storage and stored until needed for the next order.

A (high bay) racking storage facility includes a storage-entry area, via which the goods are supplied to and from which the Automatic Storage and Retrieval Machine (hereafter called AS/RS) collects the goods for placement in storage, the so-called front-zone. In a similar manner, a retrieval area is required, at which after retrieval from storage the AS/RS deposit the goods which are likewise assigned to the front-zone. In the case of automatic picking storage facilities, picking locations are typically situated in the front-zone. In the front-zone, the goods are also identified for the inventory management system or the material flow computer.

EP 1 964 792 B1 by the present applicant discloses a method of making transporting units available from a storage facility on at least one collecting line. AS/RS of the shuttle type in each storage racking aisle, retrieval-from-storage and outbound lines are controlled, in such a way as to be matched and coordinated to one another, and are loaded with goods that ultimately they end up on, or are discharged from, the collecting line in a sorted fashion.

The control and matching are thus relatively complex and require evident technical work in the so-called front-zone, i.e. the area outside the actual racking, which is necessary to achieve high trough put and sequencing.

The shuttle is used for storing a unit load to and retrieving a unit load from the left or right multi-tier racks. The conventional transferring shuttle comprises a travelling platform that can carry a unit load on its mid area, and a load handling mechanism for taking in and out the unit load on the travelling platform in horizontally lateral directions (both left and right directions) perpendicular to the traveling directions of the platform.

The conventional load handling mechanism described in Japanese Patent Application Laid-Open No. 8-324721 comprises three-stage telescopic mechanisms provided in the front and rear of the unit-load carriage in the travelling platform, respectively. Each telescopic mechanism is a known mechanism constituted by a fixed rail fixed on the travelling platform, a first sliding rail slidably engaged with the fixed rail, and a second sliding rail slidably engaged with the first sliding rail. The first and second sliding rails are connected to each other with pulleys and a belt, so that, when the first sliding rail is moved leftward or rightward with respect to the fixed rail, the second sliding rail further moves in the same direction with respect to the first sliding rail. Means for activating the first sliding rail is constructed by a motor attached to the platform, a pinion attached to the rotary shaft of the motor, and a rack which is secured to the first sliding rail and meshes with the pinion.

Both end parts of the second sliding rail are provided with outer fingers each of which can be moved between a position at which the outer finger projects to the unit-load carriage and a position at which the outer finger is retracted from the unit-load carriage. When these outer fingers are placed at the projected position, the fingers can press against left and right end faces of a unit load and can take in and out the unit load.

Meanwhile, the automated storage/retrieval systems always have the need for increasing their storage capacity. For such a need, various strategies have conventionally been proposed. One of the strategies is a method that includes pushing unit loads to each shelf of the multi-tier racks as deep as possible (away from the traveling path of the transferring shuttle as farther as possible), and arranging the unit loads by, for example, two rows in the front and rear directions. For achieving this strategy, the left/right stroke of the telescopic mechanism of the transferring shuttle is required to be about two times that of the conventional one.

However, for doubling the stroke of the telescopic mechanism by modifying a typical transferring shuttle described in Japanese Patent Application Laid-Open No. 8-324721, it is necessary to provide at least three sliding rails in the telescopic mechanism. Thus increasing the number of sliding rails which are prone to wear may cause failures. This also complicates the system structure and makes it impossible to commonly design the shuttles having the standard and doubled strokes and purchase their parts, so that no advantage of scale can be expected, whereby the manufacturing cost increases. Further, since the telescopic mechanism becomes thicker, a space for inserting the sliding rails is required to be formed on a shelf of the multi-tier racks, which increases the clearance between unit loads, thereby inhibiting the improvement of the accommodating capacity.

The applicants own filing DE 10 2012 107 176 A1 discloses a method of inter changing units within the rack itself by means of the load handling means (shuttles), such that the units must not be retrieved and rerouted through the front zone. Essentially the units are pushed through adjacent racks from a rack of the first aisle into the adjacent rack of the next aisle where a second load handling means may retrieve the unit if needed, whereby most of the front zone functions become obsolete.

However this so-called inter-aisle-transfer needs load handling means that have an extended range, if the units need to be stored more than double deep within the adjoining racks for the transfer from the source side rack to the destination side rack.

This could be achieved by a telescopic arm on the load handling means or shuttle with an extended range, by lengthening the telescope segments (see above). However this would imply a greater width of the load handling means which in turn leads to an unwanted broader aisle. The alternative use of more telescope segments is also not preferred as it leads to bigger shuttles or loss of carrying space. Further it would complicate the telescope construction/ structure and actuation.

Therefore the object of the invention is to provide a load handling means with an extended range for putting units into storage deeper than usual.

This object is achieved by the method stated in claim 1.

In accordance with the invention, it has been recognized that if the load handling means uses a dummy unit to push the unit-load deeper into the rack, the range of the load handling means is extended by almost the length of the dummy unit.

The dummy unit is therefore used as a length extension of the telescopic mechanism or arms without need of altering the telescopic mechanism or load handling means itself.

It is preferred that the load handling means is loaded with the unit-load to be stored and the dummy unit displaces the unit-load. In other words the dummy unit displaces the unit-load on the unit-load carriage thereby pushing it into the racking. It is of course also possible to first drop off the unit-load, then to pickup the dummy unit and then use it to push the unit-load further into the rack.

In a preferred embodiment the dummy unit is therefore gripped at least by the outer fingers at one end of the rails and is positioned such that it pushes the unit-load to be stored as the rails extend.

The dummy unit may be gripped like a usual unit-load by placing the outer fingers behind it and pulling them. On the other hand it is also possible to use a special kind of dummy unit having vertical slots in its sidewalls allowing fingers to enter the slots and thereby allowing the dummy unit to be gripped sideways (see below). This allows a further extension of the range and at the same time retraction of the dummy unit back out of the aisle after deeper placement of the unit-load.

The dummy unit can be placed anywhere within the racks reachable by the load handling means. It is however preferred that the dummy unit is positioned in the rack on the other side of the aisle to the rack into which the unit-load is to be stored into. Then the pickup of the dummy is simplified. If the dummy unit is positioned in the rack directly opposite the rack into which the unit-load is to be stored, the pickup is not only simplified but allows for simultaneous displacement of the unit-load in the rack on the other side.

Therefore the load handling means loaded with the load-unit to be stored can grip the dummy unit in a rack on the opposite side of the aisle and at the same time as it pulls the dummy unit and pushes the unit-load with the dummy unit into the rack into which the unit-load is to be stored.

As explained above this can be achieved when the dummy unit is gripped by placing the fingers behind the dummy unit or if the dummy unit is gripped by placing the fingers into slots in the side wall of the corresponding dummy unit.

In a preferred embodiment the load handling means loaded with the load-unit to be stored displaces the unit-load by pushing it with the gripped dummy unit, regripps the dummy unit (by means of the slots) and displaces the unit-load again (i.e. further) by pushing it with the regripped dummy unit.

The rail of the transferring shuttle having the largest movable range may be provided with an inner finger between the outer fingers, operable between the projected position and the retracted position, the number of the inner fingers being 2 on each side of the rail.

Also a distance adapted to place a unit load may exist between one of the inner fingers and the outer finger farther from the one inner finger, and a distance adapted to place a unit load exists between the other inner finger and the other outer finger.

The invention also pertains to a dummy unit per se with a rectangular shape (seen in section) with longitudinal and small sidewalls and optionally a bottom wall, with vertical slots in both longitudinal side walls.

In particular 4 slots per longitudinal side wall are present, especially one at each end and two evenly spaced about the middle of the sidewall length.

The dummy unit will usually be dimensioned according to the dimension of the unit-loads (totes, container, trays, boxes etc.) used in the facility and in particular to the size of the unit-load carriage as will the slots be sized and positioned according to the size and position of the fingers on the rails of the telescopic mechanism.

Further features and details of the invention are apparent from the description hereinafter of the drawing, in which
- Figure 1: a first way of performing the method according to the invention in a storage facility;
- Figure 2: a second way of performing the method according to the invention in a storage facility and
- Figure 3: a dummy unit for use in the above methods.

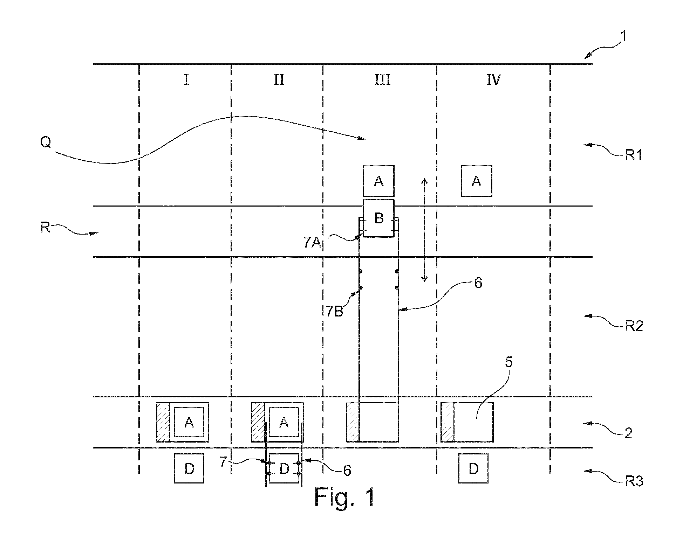

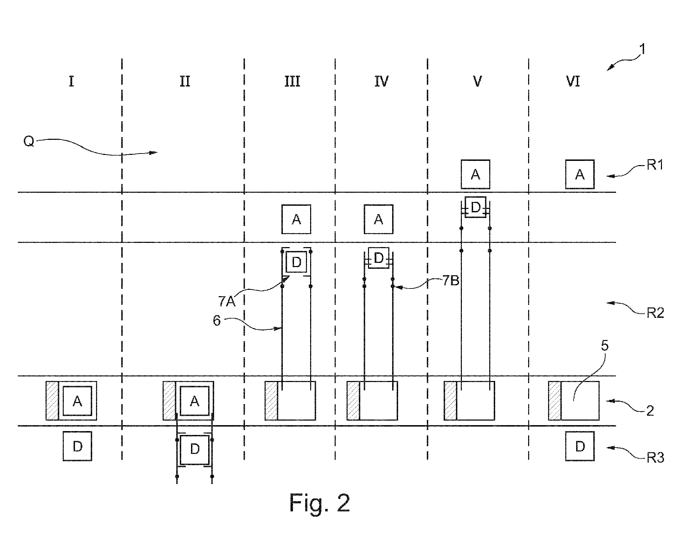

In figures 1 and 2 a storage facility denoted as a whole with 1 is shown, having a plurality of storage racking aisles 2 and storage racking units R having a plurality of levels. In the figure only a small area is depicted.

The storage racking units R are disposed in such a manner that the storage racking units R which are not disposed on the outside are each disposed in pairs adjoining one another and have a storage racking aisle 2on one side.

The storage racking units R1 and R2 located on the inside in each case abut one another "back-to-back".

Every other storage racking unit R is provided with a lift (not shown) having at positions for two units in each case. The lift is positioned within the rack itself, i.e. within its footprint, such that the single level shuttle 5 may pass the lift in the aisle 2 (drive-by configuration).

The lift is adjoined by an inbound and outbound buffer conveyor and in each storage level, which are disposed between the lift and the storage racking R, in order to decouple the lift from the shuttles 5 which travel in the storage racking aisle 2.

The shuttle 5 is fed by an inbound-buffer and feeds into an outbound-buffer, wherein both buffers are arranged within the racking unit R directly adjacent the lift. In other words the shuttle 5 drop off the units to the buffer or pick up the units from the buffer. The buffer feed into the lift 8 and the lift feed out to the buffer.

The shuttles 5 are provided in each storage racking aisle 2 and in each level of the storage. These are thus a so-called "captive" variant, in which the shuttles or satellite vehicles 5 are fixedly allocated to a level and do not change levels or aisles, which theoretically would be possible.

The shuttles 5 include a transport platform for receiving/carrying the respective storage unit A (paperboard container, tray, totes, container, goods without any loading aids, etc.). Disposed in each case to the side on the transport platform are telescopic arms 6 which push the storage unit A off, or pull it onto, the platform. In addition, the telescopic arms 6 are extendible on both sides of the storage racking aisle 2 into the racking units R and have fingers which can be open (denoted with 7B) and close (denoted with 7A) in a known manner.

Particular exchange locations Q for cross-conveyance of units A from one racking R2 into the adjacent racking R1 are provided in each level of the storage racking units R, so that the units are exchanged inside the storage racking units R themselves and it is possible to dispense with or at least minimize corresponding work in the pre-zone.

The locations Q for cross-conveyance of units A are located directly behind the buffers or corresponding positions in the racking units R.

Therefore, the shuttle 5 or the telescopic arms thereof can deposit units A in the cross conveyance locations Q and push them to the corresponding location in the adjacent racking R.

For this purpose, the respective unit A is being acted upon by the finger of the telescopic arms beyond a normal rear storage location of one cross conveyance location Q of the first racking R2 into the respective rear storage location of the adjacent cross conveyance location Q of the adjacent racking R1 (indicated by arrows). In other words the units are pushed through one rack past the usual storage position into a second adjoining rack R1.

To do so with an extended range, that is greater than usual, e.g. it the abutting racks R1 and R2 are deeper than usual (for example due to fire sprinklers in between etc.) the shuttle 5 may use a range extender in form of a dummy unit D.

The shuttle 5 uses the dummy unit D to push the unit-load A deeper into the rack, so the range of the telescopic arms 6 is extended by almost the length of the dummy unit D.

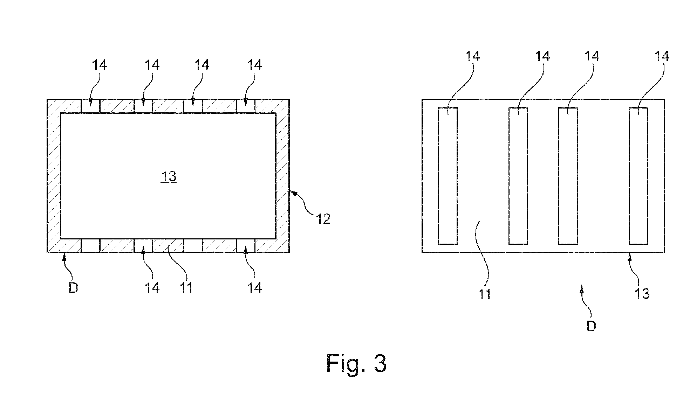

The dummy unit D itself is shown in figure 3. Left hand side of figure 3 shows a section through a dummy unit and right hand side shows a side view.

Dummy unit D is equipped with a rectangular box shape with longitudinal 11 and small sidewalls12 and a bottom wall 13. It may be open at the top.

The dummy unit D has vertical slots 14 in both longitudinal side walls 11, in particular 4 slots 14 per longitudinal side wall, one at each end and two evenly spaced about the middle of the sidewall length.

Following the two methods of using a dummy unit D for range extension will be explained with reference to figures 1 and 2.

In both figures the shuttle 5 is loaded with the unit-load A to be stored in the rack R1 via the cross conveyance location Q and the dummy unit D is positioned directly opposite in the rack R3 on the other side of the aisle 2 to the rack R2 into which the unit-load is to be stored into for transfer (Step I).

Then the shuttle 5 extends its arms 6 into rack R3 and the dummy unit D is gripped by the outer fingers 7 at one end of the rails by entering the slots 14 (Step II of Figure 1).

The shuttle 5 then pulls dummy unit D onto its platform whereby it displaces unit load A into the rack R2 and further in the cross conveyance location Q into rack R1 (Step III of Figure 1).

Afterwards the arms 6 are retracted and the dummy unit D restored back into its waiting position in rack R3 across the aisle (Step IV of Figure 1).

In contrast to this, according to the method shown with reference to figure 2, the shuttle 5 extends its arms 6 into rack R3 and the dummy unit D is gripped by the outer fingers 7 at one end of the rails by placing the fingers 7A behind the dummy unit D (Step II of Figure 2).

The shuttle 5 then pulls dummy unit D onto its platform whereby it displaces unit load A into the rack R2 and further in the cross conveyance location Q into rack R1 (Step III of Figure 2). However this is displacement is not as far as in the first method.

Therefore the arms 6 are retracted a bit and dummy unit D is regripped by the outer fingers 7 at one end of the rails by entering the slots 14 (Step IV of Figure 2).

Now the shuttle 5 displaces the unit-load A again (i.e. further) by pushing it with the regripped dummy unit D (Step V of Figure 2).

Afterwards the arms 6 are retracted and the dummy unit D restored back into its waiting position in rack R3 across the aisle (Step VI of Figure 1).

## Claims

**1.** Method of extending the load handling range of a load handling means used in an automated storage/retrieval system, which includes a pair of multi-level racks arranged parallel to each other, wherein the load handling means is for storing unit loads and retrieving a unit load from the multi-level racks, the load handling means, preferably transferring shuttle, comprising:
a travelling platform adapted to travel horizontally between the multi-tier racks, said travelling platform having a unit-load carriage on which the unit load can be carried;
respective telescopic mechanisms provided in front and rear parts of the travelling platform, the unit-load carriage being between the telescopic mechanisms, each telescopic mechanism being constituted by a plurality of rails adapted to expand and contract in a horizontally lateral direction perpendicular to the traveling direction of the travelling platform; and
respective outer fingers provided at both ends of the rail having the largest movable range in the plurality of rails, each finger being operable between a projected position where the finger projects to the unit-load carriage and a retracted position where the finger is retracted from the unit-load carriage,
**characterized in that**
the load handling means uses a dummy unit to push the unit-load deeper into the rack.

**2.** Method as claimed in claim 1, **characterized in that** load handling means is loaded with the unit-load to be stored and the dummy unit displaces the unit-load.

**3.** Method as claimed in claim 1 or 2, **characterized in that** the dummy unit is gripped at least by the outer fingers at one end of the rails and is positioned such that it pushes the unit-load to be stored as the rails extend.

**4.** Method as claimed in claim 3, **characterized in that** the dummy unit is positioned in the rack on the other side of the aisle to the rack into which the unit-load is to be stored into.

**5.** Method as claimed in claim 3 or 4, **characterized in that** the dummy unit is positioned in the rack directly opposite the rack into which the unit-load is to be stored.

**6.** Method as claimed in any one of the previous claims, **characterized in that** the load handling means loaded with the load-unit to be stored grips the dummy unit in a rack on the opposite side of the aisle and at the same time as it pulls the dummy unit and pushes the unit-load with the dummy unit into the rack into which the unit-load is to be stored.

**7.** Method as claimed in claim 6, **characterized in that** the dummy unit is gripped by placing the fingers behind the dummy unit.

**8.** Method as claimed in claim 6, **characterized in that** the dummy unit is gripped by placing the fingers into slots in the side wall of the dummy unit.

**7.** Method as claimed in any one of the previous claims, **characterized in that** the load handling means loaded with the load-unit to be stored places displaces the unit-load by pushing it with the gripped dummy unit, regripps the dummy unit and displaces the unit-load again by pushing it with the regripped dummy unit.

**8.** Method as claimed in any one of the previous claims, **characterized in that** the rail of the transferring shuttle having the largest movable range is provided with an inner finger between the outer fingers, operable between the projected position and the retracted position, the number of the inner fingers being 2 on each side of the rail.

**9.** Method as claimed in claim 8, **characterized in that** a distance adapted to place a unit load exists between one of the inner fingers and the outer finger farther from the one inner finger, and a distance adapted to place a unit load exists between the other inner finger and the other outer finger.

**10.** Dummy unit, in particular for use in a method according to any one of the previous claims, with a rectangular shape (seen in section) with longitudinal and small sidewalls and optionally a bottom wall, with vertical slots in both longitudinal side walls, in particular 4 slots per longitudinal side wall, especially one at each end and two evenly spaced about the middle of the sidewall length.
